# EUROPEAN PATENT APPLICATION

(11) **EP 4 826 505 A1**
(43) Date of publication of application: **21.10.2026**
(21) Application number: 24903208.7
(22) Date of filing: 18.07.2024
(51) Int. Cl.: G06F 3/0488, G06F 3/041

(54) **TOUCH PANEL CONTROLLER ADJUSTMENT DEVICE, TOUCH PANEL CONTROLLER ADJUSTMENT SYSTEM, AND CONTROL PROGRAM**

(30) Priority: 11.12.2023 JP 2023208779
(71) Applicant: United Seven Corporation, Osaka-shi, Osaka 550-0004 (JP)
(72) Inventor: NAKAJI, Ken, Osaka-shi, Osaka 550-0004 (JP)
(74) Representative: Meissner Bolte Partnerschaft mbB
(86) International application number: PCT/JP2024/025733
(87) International publication number: WO 2025/126544

(57) **Abstract**

This invention reduces or prevents adverse effects caused by a difference in OS between a touch panel device and an adjustment tool. A touch panel controller adjustment device (1) includes: a web browser (13) that communicates with a web server (20) and obtains, from the web server (20), a touch panel controller adjustment tool (100) that carries out adjustment of a touch panel controller (12). The touch panel controller adjustment tool (100) is a web application that runs on the web browser (13), and the web browser (13) is communicably connected to the touch panel controller (12).

## Description

### Technical Field

The present invention relates to a touch panel controller adjustment device and the like that carry out adjustment of a touch panel controller that controls a touch panel.

### Background Art

Along with an increase in demand for touch panels, devices equipped with touch panels have also become more diverse. For the devices equipped with the touch panels, the variety of Operating Systems (OSs) is also increasing, such as Windows (registered trademark), Linux (registered trademark), and Android (registered trademark). Furthermore, performances required for touch panels are also diverse. For example, touch panels resistant to water drops, touch panels operable by gloved hands, and touch panels operable in an environment with strong noise are demanded. In order that a touch panel can operate in a stable manner in such an environment, adjustment suitable for a respective actual situation is required. For the purpose of achievement of such adjustment, a specialized technology is required.

In order to carry out such adjustment, parameters and/or the like of a touch panel controller that controls the touch panel have been adjusted. For example, Patent Literature 1 discloses a display device with a touch panel that carries out sensing via the touch panel while avoiding rising and falling edges of video signal pulses, thereby reducing malfunctions which may be caused by noise.

### Citation List

### Patent Literature

Patent Literature 1
Japanese Patent Application Publication, Tokukai, No. 2015-201075

### Summary of Invention

### Technical Problem

Adjustment tools used to carry out adjustment of a touch panel controller are prepared for Windows, whereas those for Linux, Android, and the like, if any, have been simple ones. Therefore, adjustment of a touch panel provided to a device with Linux, Android, or the like has been carried out in the following manner. That is, the touch panel is detached from the device, only the touch panel is connected to a device with Windows, adjustment of the touch panel is carried out therein, and the touch panel is connected again to the original device. This involves a disadvantage that a noise level and/or the like may change due to a difference in OS and/or the like, and accordingly a desired adjustment result cannot be obtained.

Furthermore, the adjustment of the touch panel needs to be carried out under an actual operating environment, due to problems relating to, e.g., an OS, electrical noise, and/or physical vibration. Thus, an engineer has had to go to a location where the touch panel device is disposed.

An aspect of the present invention was made in view of the above problems, and has an objective to provide a touch panel controller adjustment device and the like capable of reducing or preventing a problem caused by a difference in OS between a touch panel device and an adjustment tool.

### Solution to Problem

In order to attain the above objective, a touch panel controller adjustment device according to an aspect of the present invention is a touch panel controller adjustment device that carries out adjustment of a touch panel controller that controls a touch panel, the touch panel controller adjustment device including: a web browser that communicates with a web server and obtains, from the web server, an adjustment tool that carries out adjustment of the touch panel controller, the adjustment tool being a web application that runs on the web browser, and the web browser being communicably connected with the touch panel controller.

In order to solve the above objective, a touch panel controller adjustment system in accordance with an aspect of the present invention is a touch panel controller adjustment system that carries out adjustment of a touch panel controller that controls a touch panel, the touch panel controller adjustment system including: an adjustment device; and an operation device, the adjustment device including a first web browser that communicates with a web server and obtains, from the web server, an adjustment tool that carries out adjustment of the touch panel controller, the first web browser being communicably connected with the touch panel controller, the operation device including a second web browser that communicates with the web server and obtains, from the web server, an adjustment tool that carries out adjustment of the touch panel controller, the adjustment tool being a web application that runs on the first web browser and the second web browser, the first web browser and the second web browser being communicable with each other, and, on a basis of a content of operation accepted by the second web browser, the adjustment tool from the first web browser connecting to the touch panel controller and carrying out the adjustment.

### Advantageous Effects of Invention

According to an aspect of the present invention, it is possible to realize, by a web application, a touch panel controller adjustment tool. Therefore, regardless of an OS of a touch panel device equipped with a touch panel, it is possible to carry out adjustment of a touch panel controller. This makes it possible to reduce or prevent an adverse effect(s) that may otherwise be caused by a difference in OS between the touch panel device and the adjustment tool.

Realizing the touch panel controller adjustment tool by a web application makes it possible to carry out the adjustment remotely. This can achieve a reduction in adjustment time, a reduction in adjustment steps, and the like.

### Brief Description of Drawings

Fig. 1 is a functional block diagram illustrating a configuration of a main part of a touch panel controller adjustment device according to a first embodiment of the present invention.
Fig. 2 is a functional block diagram illustrating a configuration of a main part of a touch panel controller adjustment system according to a second embodiment of the present invention.
Fig. 3 is a view illustrating an example in which a content of operation and/or the like in a target device is displayed on an operation device in remote operation.
Fig. 4 is a view illustrating an example in which a content of operation and/or the like in a target device is displayed on an operation device in remote operation.
Fig. 5 is a view illustrating an example of signals exchanged between a first web browser and a second web browser in remote operation.
Fig. 6 is a view illustrating an example of an instruction screen in remote operation.
Fig. 7 is a sequence diagram illustrating a flow of processing in a touch panel controller adjustment system.
Fig. 8 is a view illustrating an example of a screen used for selecting a touch panel controller that is to be adjusted by an adjustment device.
Fig. 9 is a functional block diagram illustrating a configuration of a modification.
Fig. 10 is a functional block diagram illustrating a configuration of a modification.

### Brief Description of Drawings

### First Embodiment

The following will describe details of an embodiment of the present invention. A touch panel controller adjustment device 1 according to the present embodiment carries out adjustment of a touch panel controller 12 that controls a touch panel 11. In the present embodiment, a device including a touch panel 11 that is to be adjusted will be referred to as a "target device 10".

The touch panel controller adjustment device 1 realizes, by a web application, a touch panel controller adjustment tool 100 that carries out adjustment of the touch panel controller 12. This makes it possible to carry out adjustment of the touch panel controller 12, without the need to consider a difference in OS between the target device 10 and the touch panel controller adjustment device 1.

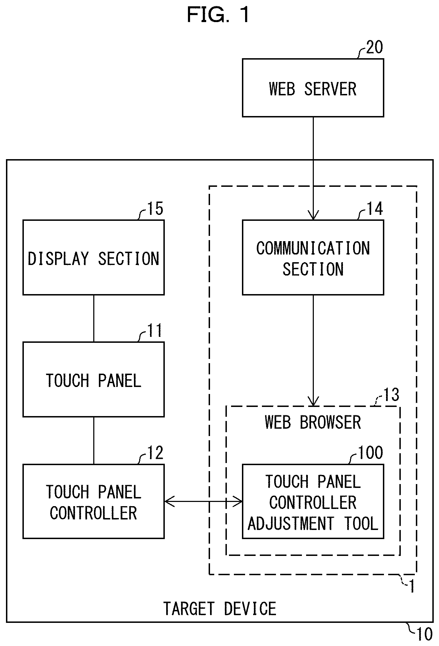

Fig. 1 illustrates a configuration of a main part of the touch panel controller adjustment device 1. Fig. 1 is a functional block diagram illustrating the configuration of the main part of the touch panel controller adjustment device 1. As illustrated in Fig. 1, the touch panel controller adjustment device 1 operates in a state where the touch panel controller adjustment device 1 is incorporated in the target device 10. Alternatively, the touch panel controller adjustment device 1 may not be incorporated in the target device 10, but may be realized as another device communicably connected with the target device 10 by Web Human Interface Device (WebHID), WebSerialCOM, or the like.

As illustrated in Fig. 1, the target device 10 includes a touch panel 11 and a touch panel controller 12. The target device 10 further includes a web browser 13, a communication section 14, and a display section 15.

The touch panel 11 is a sensor that detects contact or approach of an operating body (e.g., a user's finger) and outputs a signal.

The touch panel controller 12 controls the touch panel 11. More specifically, the touch panel controller 12 drives the touch panel 11 and processes a signal output from the touch panel 11, thereby processing operation on the touch panel 11.

The web browser 13 makes connection with a web server 20, and obtains and displays a content. In addition, the web browser 13 makes connection with the touch panel controller 12, and carries out communication. This communication is carried out via WebHID and WebSerial of the web browser 13. Since WebHID and WebSerial are standardized by World Wide Web Consortium (W3C) and differences among OSs are abstracted, it is not necessary to create communication protocols for respective different OSs.

Via the communication section 14, the target device 10 and the web server 20 communicate with each other.

The display section 15 is hardware that displays information.

The web server 20 is a server in which the touch panel controller adjustment tool 100 is stored. The web server 20 carries out, for example, management of customers who use the touch panel 11 that is adjustable by the touch panel controller adjustment tool 100, management of a version of the touch panel controller adjustment tool 100, sharing of a data file(s), and/or management of connection information for remote connection.

By downloading the touch panel controller adjustment tool 100 from the web server 20 to the target device 10, it becomes possible to carry out adjustment of the touch panel controller 12 by the web browser 13. Thus, the web browser 13 having downloaded the touch panel controller adjustment tool 100 and the communication section 14 constitute the touch panel controller adjustment device 1.

The touch panel controller adjustment tool 100 is a web application that runs on the web browser 13. The web browser 13 is communicable with the touch panel controller 12 via WebHID and WebSerial. Thus, it is possible to carry out adjustment of the touch panel controller 12 by the touch panel controller adjustment tool 100. Examples of items of adjustment and functions of the touch panel controller 12 by the touch panel controller adjustment tool 100 include the following:
- Obtaining and outputting a sensor value(s) (a raw value(s) and a filtered value(s)) of the touch panel 11;
- Visualizing and displaying the obtained sensor value(s) (in a table format, a two-dimensional (2D) format, or a three-dimensional (3D) format);
- Saving the obtained sensor value(s) (chronological order);
- Outputting coordinates of a location where an operating body is in proximity to or in contact with the touch panel 11;
- Executing self-diagnosis and obtaining a result thereof (electrical inspection);
- Confirming and changing various setting parameters;
- Setting for a case where a standard finger serves as an operating body;
- Setting for a case where a glove serves as an operating body;
- Setting of a status display for a case where water is detected;
- Setting of a status display for a case where a palm is detected;
- Setting of sensitivity;
- Setting of automatic adjustment as to whether or not to automatically adjust initial values of respective parameters in accordance with a sensor value(s), environmental noise, and/or the like;
- Adjusting a noise level in accordance with environmental noise and/or the like at the time of installation (calibration adjustment); and
- Reading and writing of firmware.

In addition, the touch panel controller adjustment tool 100 can record and reproduce sensor data in the touch panel 11 by using the web browser 13. The recording and reproduction of the sensor data may be carried out in chronological order.

The recording of the data may be carried out such that, in response to pressing of a recording button (not illustrated), the data is recorded together with a time stamp in chronological order in a memory in the web browser. The data thus recorded may be displayed on the display section 15 by designating an arbitrary time on a progress bar on a timeline. Furthermore, the display may be a display that reproduces, by animation, how the recording was performed. The recorded information may be uploaded to the web server 20.

Moreover, since the touch panel controller adjustment tool 100 is a web application, software version upgrade can be carried out via communication. This eliminates the need to send the upgraded touch panel controller adjustment tool 100 to a customer and/or the like every time the version is upgraded.

Furthermore, the touch panel controller adjustment tool 100 can be created with one source code, and can be made compatible with a plurality of OSs.

As described above, the touch panel controller adjustment device 1 according to the present embodiment carries out adjustment of the touch panel controller 12 that controls the touch panel 11. Then, the touch panel controller adjustment device 1 includes the web browser 13 that communicates with the web server 20 and obtains, from the web server 20, the touch panel controller adjustment tool 100 that carries out adjustment of the touch panel controller 12. The web browser 13 is communicably connected with the touch panel controller 12, and the touch panel controller adjustment tool 100 is a web application that runs on the web browser 13.

Conventionally, in order to carry out adjustment of a touch panel controller, it has been necessary to prepare an adjustment tool compatible with an OS of a device (touch panel device) including a touch panel controlled by the touch panel controller. With the touch panel controller adjustment device 1, the touch panel controller adjustment tool 100 can be realized by a web application. Therefore, the adjustment of the touch panel controller 12 can be carried out regardless of the OS of the touch panel device (target device 10). This eliminates the need to prepare adjustment tools for different OSs.

Moreover, in a state where an OS on which an adjustment tool runs and an OS of a touch panel device are different from each other, it has been necessary to detach the touch panel from the touch panel device, connect a device equipped with the OS on which the adjustment tool runs with the touch panel, and carry out adjustment. On the other hand, this work is eliminated in a case where the touch panel controller adjustment device 1 is employed. Furthermore, it is also possible to reduce or prevent the following problem. That is, even after adjustment is carried out by an adjustment tool, a result of the adjustment by the adjustment tool does not match a result desired for the touch panel device, because the OS of the device on which the adjustment tool runs and the OS of the touch panel device are different from each other.

### Second Embodiment

The following will describe another embodiment of the present invention. For convenience of description, members having identical functions to those described in the above embodiment are given identical reference signs, and description thereof will be omitted.

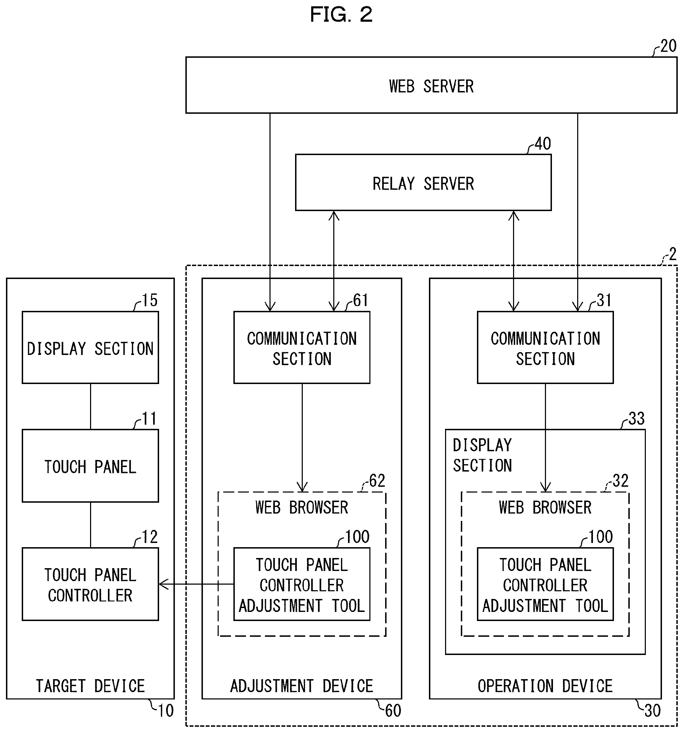

The following will describe a touch panel controller adjustment system 2 according to the present embodiment with reference to Fig. 2. Fig. 2 is a functional block diagram illustrating a configuration of a main part of the touch panel controller adjustment system 2.

As illustrated in Fig. 2, the touch panel controller adjustment system 2 according to the present embodiment includes an adjustment device 60 and an operation device 30.

The adjustment device 60 corresponds to the above-described touch panel controller adjustment device 1. The adjustment device 60 includes a web browser 62 (first web browser) that communicates with a web server 20 and obtains, from the web server 20, a touch panel controller adjustment tool 100 that carries out adjustment of a touch panel controller 12.

The web browser 62 is communicably connected with the touch panel controller 12.

The operation device 30 includes a web browser 32 (second web browser) that communicates with the web server 20 and obtains, from the web server 20, the touch panel controller adjustment tool 100 that carries out adjustment of the touch panel controller 12.

The touch panel controller adjustment tool 100 is a web application that runs on the web browser 62 and the web browser 32. The web browser 62 and the web browser 32 are communicable with each other via a relay server 40. Further, on the basis of details of operation accepted by the web browser 32, the touch panel controller adjustment tool 100 is connected with the touch panel controller 12 via the web browser 62 and carries out adjustment.

In the description here, the web browser 62 and the web browser 32 are communicable with each other via the relay server 40. Alternatively, the web browser 62 and the web browser 32 may communicate with each other via the web server 20, rather than via the relay server 40. That is, the web server 20 may serve as the relay server 40.

Further, communication between the web browser 62 and the web browser 32 may be carried out via WebSocket or WebRTC. In a case where WebSocket is used, communication is carried out via the relay server 40 or the web server 20. In a case where WebRTC is used, the relay server 40 or the web server 20 is required to establish connection between the web browser 62 and the web browser 32; however, after the connection is established, the communication may be carried out directly.

With the touch panel controller adjustment system 2, adjustment of the touch panel controller 12 by the adjustment device 60 can be carried out by using the touch panel controller adjustment tool 100, and the adjustment by the adjustment device 60 can be operated by the operation device 30. Since the operation device 30 can be disposed at a location away from the target device 10, the adjustment of the touch panel controller 12 can be carried out remotely. Consequently, it is possible to carry out adjustment of the touch panel controller 12 even without sending an engineer to a location where the target device 10 is disposed.

Hereinafter, operation of carrying out adjustment of the touch panel controller 12 by the adjustment device 60 by using the operation device 30 will be referred to as "remote operation".

Note that the remote operation by the operation device 30 is different from a so-called "remote desktop", in which a screen of a personal computer or the like at a remote location is transferred and operated.

According to a conventional "remote desktop", screen data of a remote destination is transferred to an operation device, and the transferred screen data is displayed and operated in the operation device. This causes the following problems in this technology. That is, since this technology transfers screen data, data communication amount increases. Moreover, since this technology creates a screen from screen data, processing load of an operation device increases. Furthermore, this technology requires a communication technology such as a VPN for communication between WANs.

The operation by the operation device 30 according to the present embodiment is not carried out in such a manner that screen data is obtained and operation is carried out. Instead, the operation by the operation device 30 is carried out in such a manner that adjustment of the touch panel controller 12 is carried out by using a sensor value(s) and a setting value(s) obtained by the touch panel controller 12. This eliminates the need to transfer screen data, thereby making it possible to reduce a data communication amount and a communication fee. In addition, it also becomes possible to save and analyze, in an operation device, data values obtained and/or detected at a remote destination, which has been impossible with a conventional "remote desktop".

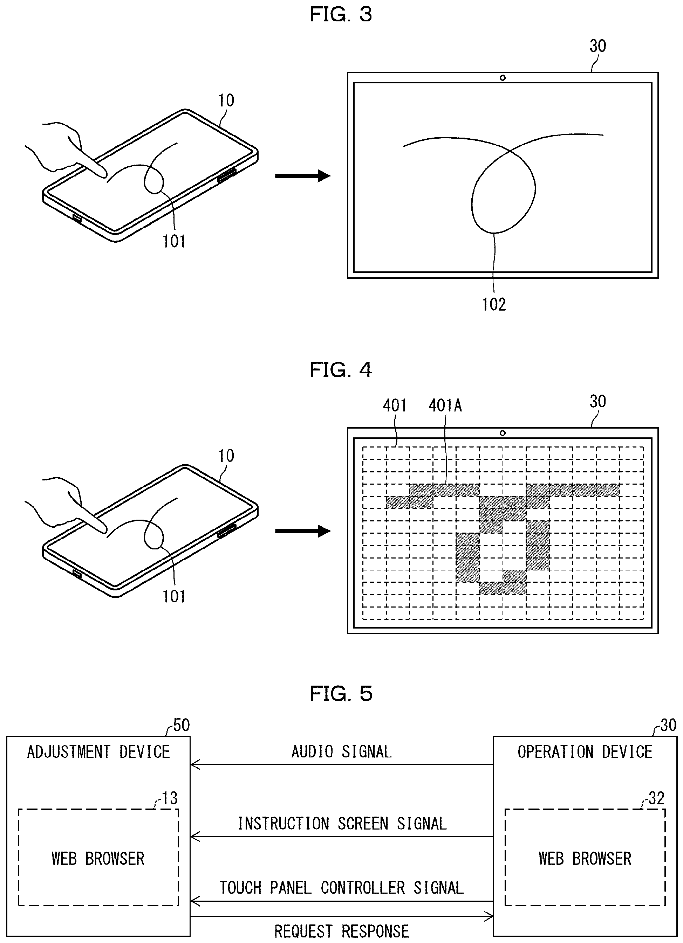

Fig. 3 and Fig. 4 illustrate examples in which a content of operation and/or the like in the target device 10 is displayed on the operation device 30 in remote operation.

For example, when operation is carried out on the touch panel 11 in such a manner that a trajectory 101 as illustrated in Fig. 3 is drawn, a trajectory 102 similar to the trajectory 101 is displayed on a display section 33 of the operation device 30. This makes it possible for an engineer of the operation device 30 to recognize what kind of operation was carried out on the touch panel 11.

Furthermore, as illustrated in Fig. 4, when operation is carried out on the touch panel 11 in such a manner that the trajectory 101 is drawn, a state of a signal (e.g., a sensor value, a noise level, etc.) detected by the touch panel 11 may be indicated on the display section 33 of the operation device 30. In the example illustrated in Fig. 4, cells 401 are arranged in a matrix, and a cell 401A corresponding to a position where a signal is detected is displayed in a recognizable manner. Such display may be displayed in two dimensions (2D), or may be displayed stereoscopically in three dimensions (3D). The matrix display may be generated by using, for example, a table tag or the like. The 2D display may be generated by using, for example, a canvas tag. The 3D display may be generated by using, for example, WebGL. In addition, the sensor value may be a raw value or a value having been processed by filtering and/or the like. With this, an engineer can recognize a detection state in the touch panel 11.

Fig. 5 illustrates an example of signals exchanged between the web browser 62 and the web browser 32 in remote operation. As illustrated in Fig. 5, in remote operation, an audio signal, an instruction screen signal, a touch panel controller signal, and/or the like are transmitted from the web browser 32 of the operation device 30 to the web browser 62 of the target device 10.

The audio signal refers to a signal for causing the adjustment device 60 to output an audio in response to an instruction from the operation device 30. For example, when an instruction "touch the touch panel 11 twice" is transmitted from the operation device 30 by an audio signal, an audio "touch the touch panel 11 twice" is output from the adjustment device 60. When a user touches the touch panel 11 twice upon hearing this audio, a signal detected by the touch panel 11 at that time is transmitted to the touch panel controller 12, and is then transmitted to the web browser 32 via the web browser 62. With this, an engineer who operates the operation device 30 can confirm the signal given in response to touching the touch panel 11 twice.

The instruction screen signal refers to a signal for causing the display section 15 of the target device 10 to display an instruction screen in response to an instruction from the operation device 30. For example, when an instruction screen indicating a position with the message "touch here" is transmitted from the operation device 30 by an instruction screen signal, the screen is displayed on the display section 15 of the target device 10. When a user touches the designated position on the touch panel 11 upon seeing this screen, a signal detected by the touch panel 11 at that time is transmitted to the touch panel controller 12, and is then transmitted to the web browser 32 via the web browser 62. With this, an engineer who operates the operation device 30 can confirm the signal given when the designated position on the touch panel 11 is touched.

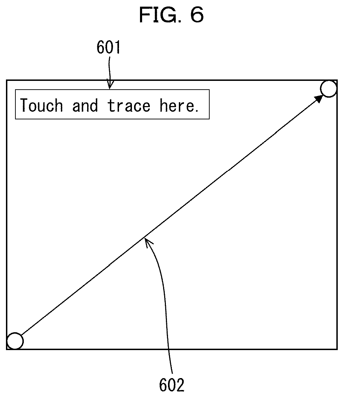

Fig. 6 illustrates an example of an instruction screen. In the example illustrated in Fig. 6, a touch path 602 extending from a lower left to an upper right of the screen is displayed, and an instruction wording 601 "Touch and trace here." is also displayed. When this screen is displayed on the display section 15 of the target device 10 and a user touches and traces the touch path 602 in accordance with this instruction, a signal detected by the touch panel 11 at that time is transmitted to the touch panel controller 12, and is then transmitted to the web browser 32 via the web browser 62. With this, an engineer who operates the operation device 30 can confirm a signal given when the designated position on the touch panel 11 is touched.

The touch panel controller signal refers to a signal for operating the touch panel controller 12. When an engineer who operates the operation device 30 wishes desired driving in the touch panel 11, a touch panel controller signal indicating details of the driving is transmitted. As a result, the desired driving is carried out in the touch panel 11, and a signal detected by the touch panel 11 at that time is transmitted to the web browser 32 via the web browser 62. With this, an engineer who operates the operation device 30 can confirm a signal given when the touch panel 11 is caused to carry out the desired driving.

A request response refers to a response from the web browser 62 to the signal transmitted from the web browser 32.

Note that the examples of the signals indicated herein are merely examples. Various signals relating to adjustment are transmitted from the web browser 32 to the web browser 62. In addition, a signal output from the touch panel controller 12 is transmitted from the web browser 62 to the web browser 32.

### Flow of Processing

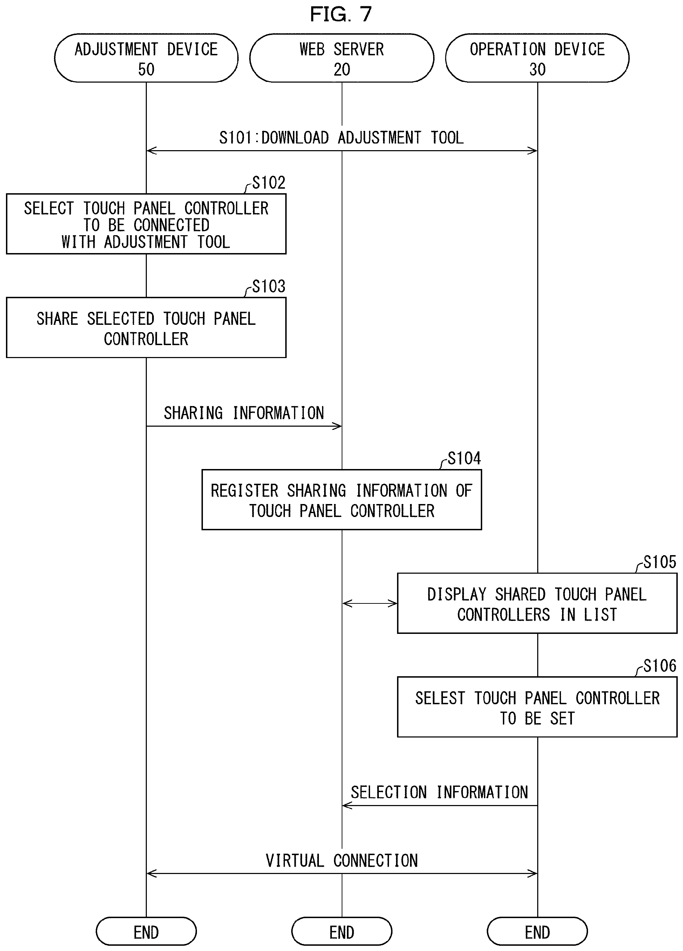

Next, the following will describe a flow of processing in the touch panel controller adjustment system 2 with reference to Fig. 7. Fig. 7 is a sequence diagram illustrating the flow of the processing in the touch panel controller adjustment system 2.

As illustrated in Fig. 7, first, the target device 10 and the operation device 30 download a touch panel controller adjustment tool 100 from the web server 20 (S101).

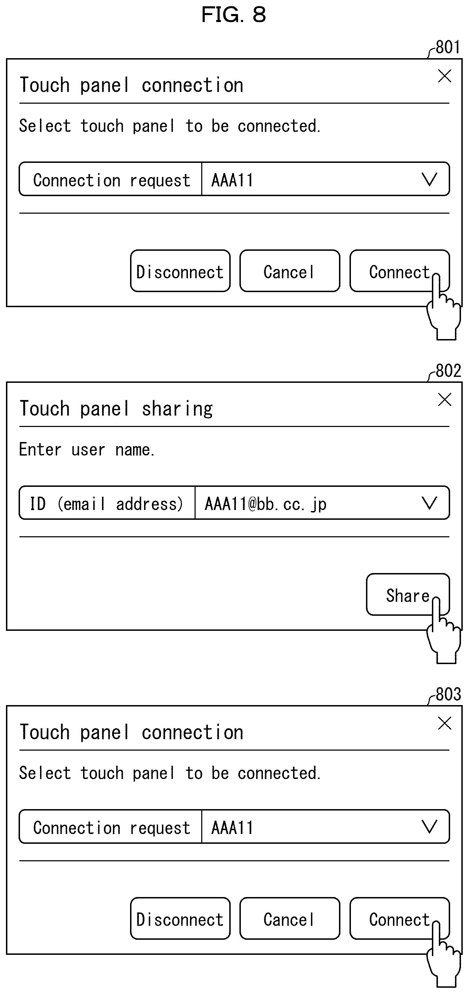

Next, the adjustment device 60 accepts selection of a touch panel controller 12 that is to be connected with the touch panel controller adjustment tool 100 (S102). In the part with the reference sign "801" of Fig. 8, an example of a screen for selecting a touch panel controller 12 is illustrated. In the example illustrated in the part with the reference sign "801" of Fig. 8, "AAA11" is selected as the touch panel controller 12 that is to be connected. The adjustment device 60 then allows sharing of the touch panel controller 12 thus selected (S103). The expression "sharing of the touch panel controller 12" means allowing adjustment of the touch panel controller 12 to be carried out by an operation device 30 different from the adjustment device 60. In a case where the touch panel controller 12 is shared, a screen for accepting a user name of a user who involves the sharing, as illustrated in the part with the reference sign "802" of Fig. 8, may be displayed. In the example illustrated in the part with the reference sign "802" of Fig. 8, "ID (email address): AAA11@bb.cc.jp" has been input as a user name of a sharing destination.

When the touch panel controller 12 is shared by the adjustment device 60, sharing information is transmitted to the web server 20. Upon obtaining the sharing information, the web server 20 registers, in management data, that the touch panel controller 12 is shared (S104).

In order to carry out adjustment of the touch panel controller 12 by the operation device 30, shared touch panel controllers 12 are displayed in a list (S105), and a touch panel controller 12 that is to be adjusted is selected from among the touch panel controllers 12 displayed in a list (S106). The part with the reference sign "803" in Fig. 8 illustrates an example of a screen for selecting a touch panel controller 12 that is to be adjusted from among the touch panel controllers 12 displayed in a list. In the example indicated herein, the shared touch panel controllers 12 are displayed in a list by a pull-down method.

When a touch panel controller 12 that is to be adjusted by the operation device 30 is selected, selection information is transmitted to the web server 20. Upon receiving the selection information, the web server 20 connects (virtually connects) (a) the web browser 62 connected to the selected touch panel controller 12 with (b) the web browser 32 of the operation device 30 that carries out operation of carrying out adjustment of the touch panel controller 12. This makes it possible to carry out adjustment of the touch panel controller 12 of the target device 10 by the web browser 32 of the operation device 30.

As described above, adjustment of the touch panel controller 12 can be carried out by remote operation. Therefore, it is possible to carry out adjustment of the touch panel controller 12 without taking time or effort such as sending an engineer to the site or transporting the target device 10 that is to be adjusted to a place where an engineer is present.

In addition, in the touch panel controller adjustment tool 100, sensor data of the touch panel 11 can be recorded and reproduced in chronological order by using a web browser. Therefore, it is possible to record the sensor data by the web browser 62 of the adjustment device 60 and reproduce the sensor data by the web browser 32 of the operation device 30. This makes it possible for an engineer to easily recognize a state of the touch panel 11.

Note that the touch panel controller adjustment tool 100 may include (a) a part that functions in the operation device 30 and (b) a part that functions in the adjustment device 60, and does not necessarily include completely identical functions, that is, a single function operating in the operation device 30 and the adjustment device 60. The operation device 30 and the adjustment device 60 may each independently obtain, from the touch panel controller adjustment tool 100, a functional part of its own device.

In other words, the touch panel controller adjustment tool 100 downloaded by the web browser 62 and the touch panel controller adjustment tool 100 downloaded by the web browser 32 may not be completely identical to each other. It is sufficient that each of the touch panel controller adjustment tool 100 downloaded by the web browser 62 and the touch panel controller adjustment tool 100 downloaded by the web browser 32 has the above-described functions. Needless to say, the touch panel controller adjustment tool 100 downloaded by the web browser 62 and the touch panel controller adjustment tool 100 downloaded by the web browser 32 may be identical to each other.

Furthermore, the web browser 62 and the web browser 32 may also be identical to each other or different from each other.

### First Modification

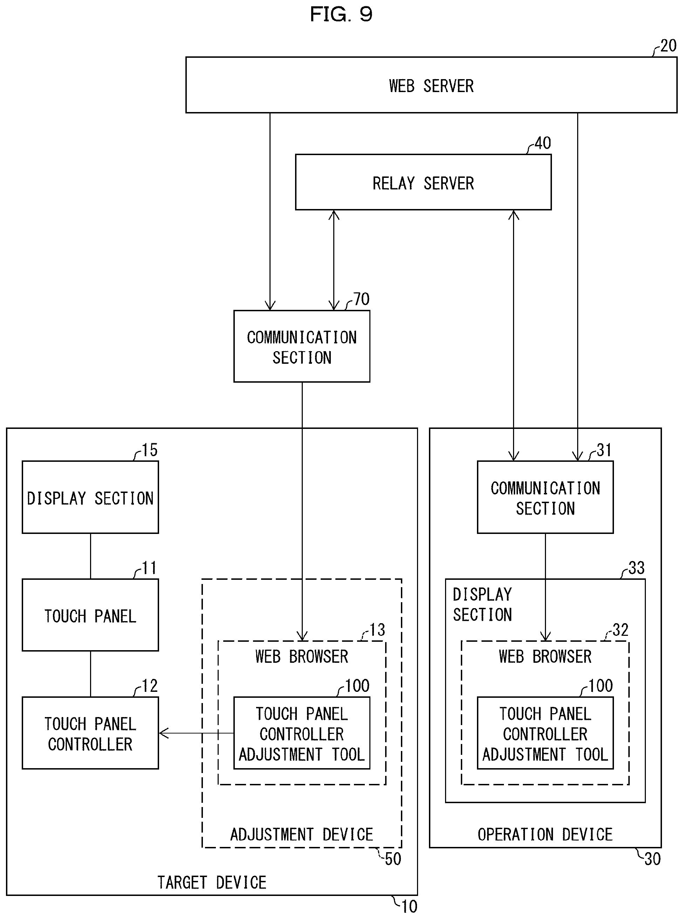

Fig. 9 illustrates a modification of the present embodiment. The present modification is an example case where a target device 10 is in an environment in which the target device 10 is unconnectable with the Internet. Some business operators prohibit connecting the target device 10 directly to the Internet. In such a case, it is impossible to connect the target device 10 with a web server 20 and download a touch panel controller adjustment tool 100.

In order to deal with this, as illustrated in Fig. 9, a mobile phone terminal capable of tethering is prepared as a communication device 70. Then, the communication device 70 and the target device 10 are connected with each other. Further, by using the tethering function of the communication device 70, the target device 10 is connected with the web server 20. This makes it possible to download the touch panel controller adjustment tool 100 from the web server 20 and remotely carry out adjustment of the touch panel controller 12 by the operation device 30 even in an environment in which the target device 10 is directly unconnectable with the Internet.

### Second Modification

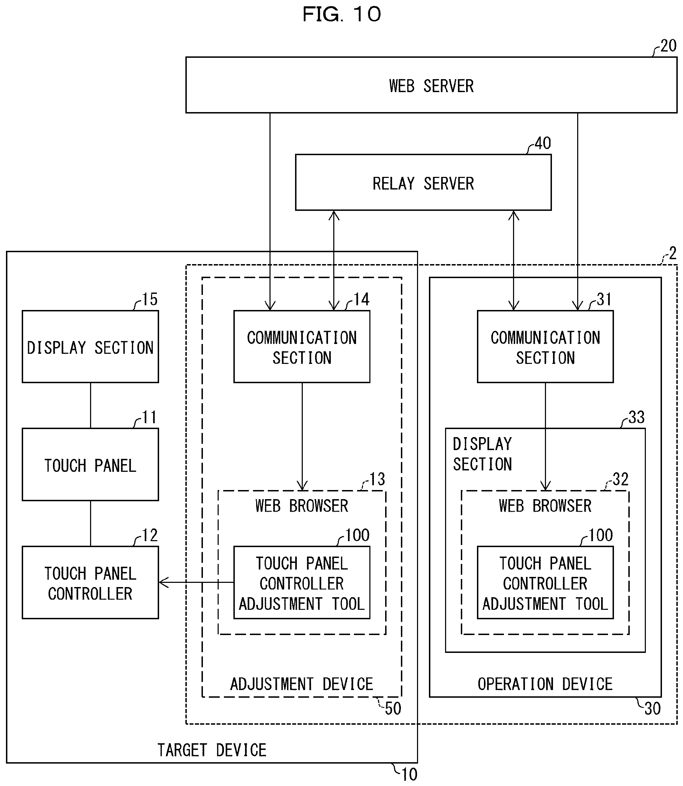

Fig. 10 illustrates another modification of the present embodiment. The present modification is an example case where a target device 10 is provided with a web browser. In the case where the target device 10 is provided with the web browser, it is not necessary to prepare an adjustment device 60 provided with a web browser 62, as described above. In this case, a web browser 13 (first web browser) and a communication section 14 provided in the target device 10 constitute an adjustment device 50. That is, a web browser 13 serves as the web browser 62 described above.

Fig. 10 illustrates an example of adjusting the touch panel controller 12 by using the adjustment device 50 provided with the communication section 14 and the web browser 13. In the example illustrated in Fig. 10, the touch panel controller adjustment tool 100 is downloaded to the web browser 13 provided in the target device 10. Then, the touch panel controller adjustment tool 100 is operated on the web browser 13. This makes it possible to remotely carry out adjustment of the touch panel controller 12 by the operation device 30.

### Software Implementation Example

The functions of the operation device 30 and the adjustment devices 50 and 60 (hereinafter, each referred to as "device") can be realized by a program for causing a computer to function as the device, the program causing the computer to function as the touch panel controller adjustment tool 100.

In this case, the device includes a computer that has at least one control device (for example, a processor) and at least one memory device (for example, a memory) as hardware for executing the program. By executing the program by the control device and the storage device, the functions described in the above embodiments are realized.

The program can be stored in one or more non-transitory, computer-readable storage media. The one or more storage media can be included in the device or cannot be included in the device. In the latter case, the program can be made available to the device via any wired or wireless transmission medium.

Further, some of or all of the functions of the control blocks can also be realized by a logic circuit. For example, an integrated circuit in which a logic circuit functioning as the control blocks is formed is included in the scope of the present invention. Apart from the above, for example, the functions of the control blocks can also be realized by a quantum computer.

Aspects of the present invention can also be expressed as follows:
A touch panel controller adjustment device according to a first aspect of the present invention is a touch panel controller adjustment device that carries out adjustment of a touch panel controller that controls a touch panel, the touch panel controller adjustment device including: a web browser that communicates with a web server and obtains, from the web server, an adjustment tool that carries out adjustment of the touch panel controller, the adjustment tool being a web application that runs on the web browser, and the web browser being communicably connected with the touch panel controller.

Conventionally, in order to carry out adjustment of a touch panel controller, it has been necessary to prepare an adjustment tool compatible with an OS of a device (touch panel device) including a touch panel controlled by the touch panel controller. With the above configuration, the adjustment tool can be realized by a web application. Therefore, adjustment of the touch panel controller can be carried out regardless of the OS of the touch panel device. This eliminates the need to prepare adjustment tools for different OSs.

Moreover, in a state where an OS on which an adjustment tool runs and an OS of a touch panel device are different from each other, it has been necessary to detach the touch panel from the touch panel device, connect a device equipped with the OS on which the adjustment tool runs with the touch panel, and carry out adjustment. On the other hand, this work is eliminated in a case where the above configuration is employed.

Furthermore, it is also possible to reduce or prevent the following problem. That is, even after adjustment is carried out by the adjustment tool, the result of the adjustment by the adjustment tool does not match a result desired in the touch panel device, due to a difference between the connection method used during the adjustment and that used in the touch panel device, the difference occurring because the OS of the device on which the adjustment tool runs and the OS of the touch panel device are different from each other and thus reconnection is required.

A touch panel controller adjustment device according to a second aspect of the present invention is a touch panel controller adjustment system that carries out adjustment of a touch panel controller that controls a touch panel, the touch panel controller adjustment system including: an adjustment device; and an operation device, the adjustment device including a first web browser that communicates with a web server and obtains, from the web server, an adjustment tool that carries out adjustment of the touch panel controller, the first web browser being communicably connected with the touch panel controller, the operation device including a second web browser that communicates with the web server and obtains, from the web server, an adjustment tool that carries out adjustment of the touch panel controller, the adjustment tool being a web application that runs on the first web browser and the second web browser, the first web browser and the second web browser being communicable with each other, and, on a basis of a content of operation accepted by the second web browser, the adjustment tool from the first web browser connecting to the touch panel controller and carrying out the adjustment.

According to the above configuration, adjustment of the touch panel controller by the adjustment device can be carried out by using the adjustment tool. Since the adjustment device can be disposed at a location away from the touch panel device, adjustment of the touch panel controller can be carried out remotely. Consequently, it is possible to carry out adjustment of the touch panel controller even without sending an engineer to a location where the touch panel device is disposed.

A touch panel controller adjustment device according to a third aspect of the present invention is configured such that, in the second aspect, the adjustment tool causes the adjustment device to carry out at least one of audio output and image output in accordance with an instruction accepted by the operation device.

According to the above configuration, it is possible to provide, from the operation device, an instruction regarding a content of operation desired to be carried out on a touch panel.

A touch panel controller adjustment device according to a fourth aspect of the present invention is configured such that, in the second or third aspect, the adjustment tool causes a trajectory of a touch accepted by the touch panel to be displayed on a display section of the operation device.

According to the above configuration, a content of operation on the touch panel 11 can be recognized in the operation device.

A touch panel controller adjustment device according to a fifth aspect of the present invention is configured such that, in any one of the second to fourth aspects, the adjustment tool causes at least one of the first web browser and the second web browser to store, in chronological order, a content of operation accepted by the touch panel.

According to the above configuration, a content of operation on the touch panel is recorded, which makes it possible for an engineer to recognize a past state.

A touch panel controller adjustment device according to a sixth aspect of the present invention is configured such that, in any one of the second to fifth aspects, the adjustment tool causes sensor data detected by the touch panel to be displayed on a display section of the operation device in two dimensions or three dimensions.

According to the above configuration, it is possible to make an engineer visually recognize sensor data of the touch panel.

A touch panel controller adjustment device according to a seventh aspect of the present invention is configured such that, in any one of the second to sixth aspects, the adjustment device is incorporated in a touch panel device including the touch panel.

According to the above configuration, it is not necessary to prepare, as an adjustment device, a device different from the touch panel.

The touch panel controller adjustment device and the touch panel controller adjustment system 2 according to each aspect of the present invention can be realized by a computer. In this case, the scope of the present invention also encompasses: a control program for the touch panel controller adjustment device and the touch panel controller adjustment system, the control program causing a computer to operate as the adjustment tool to realize the device by the computer; and a computer-readable storage medium in which the control program is stored.

The present invention is not limited to the embodiments, but can be altered by a skilled person in the art within the scope of the claims. The present invention also encompasses, in its technical scope, any embodiment derived by combining technical means disclosed in differing embodiments. Further, it is possible to form a new technical feature by combining the technical means disclosed in the respective embodiments.

### Reference Signs List

1: Touch panel controller adjustment device
2: Touch panel controller adjustment system
10: Target device
11: Touch panel
12: Touch panel controller
13: Web browser
14: Communication section
15: Display section
20: Web server
30: Operation device
32: Web browser
33: Display section
40: Relay server
60: Adjustment device
61: Communication section
62: Web browser
100: Touch panel controller adjustment tool

## Claims

1. A touch panel controller adjustment device that carries out adjustment of a touch panel controller that controls a touch panel, the touch panel controller adjustment device comprising:
a web browser that communicates with a web server and obtains, from the web server, an adjustment tool that carries out adjustment of the touch panel controller,
the adjustment tool being a web application that runs on the web browser, and the web browser being communicably connected with the touch panel controller.

2. A touch panel controller adjustment system that carries out adjustment of a touch panel controller that controls a touch panel, the touch panel controller adjustment system comprising:
an adjustment device; and
an operation device,
the adjustment device including a first web browser that communicates with a web server and obtains, from the web server, an adjustment tool that carries out adjustment of the touch panel controller,
the first web browser being communicably connected with the touch panel controller,
the operation device including a second web browser that communicates with the web server and obtains, from the web server, an adjustment tool that carries out adjustment of the touch panel controller,
the adjustment tool being a web application that runs on the first web browser and the second web browser,
the first web browser and the second web browser being communicable with each other, and
on a basis of a content of operation accepted by the second web browser, the adjustment tool from the first web browser connecting to the touch panel controller and carrying out the adjustment.

3. The touch panel controller adjustment system according to claim 2, wherein:
the adjustment tool causes the adjustment device to carry out at least one of audio output and image output in accordance with an instruction accepted by the operation device.

4. The touch panel controller adjustment system according to claim 2, wherein:
the adjustment tool causes a trajectory of a touch accepted by the touch panel to be displayed on a display section of the operation device.

5. The touch panel controller adjustment system according to claim 2, wherein:
the adjustment tool causes at least one of the first web browser and the second web browser to store, in chronological order, a content of operation accepted by the touch panel.

6. The touch panel controller adjustment system according to claim 2, wherein:
the adjustment tool causes sensor data detected by the touch panel to be displayed on a display section of the operation device in two dimensions or three dimensions.

7. The touch panel controller adjustment system according to claim 2, wherein:
the adjustment device is incorporated in a touch panel device including the touch panel.

8. A control program for causing a computer to function as a touch panel controller adjustment device recited in claim 1, the control program causing the computer to function as the adjustment tool.
